(19) Europäisches Patentamt
European Patent Office
Office européen des brevets

(11) **EP 3 131 230 B1**

(12) **EUROPEAN PATENT SPECIFICATION**

(45) Date of publication and mention
of the grant of the patent:
**25.12.2019 Bulletin 2019/52**

(51) Int Cl.:
***H04L 9/06*** *(2006.01)*

(21) Application number: **15786055.2**

(86) International application number:
**PCT/JP2015/055603**

(22) Date of filing: **26.02.2015**

(87) International publication number:
**WO 2015/166701 (05.11.2015 Gazette 2015/44)**

(54) **ENCRYPTION METHOD, PROGRAM, AND SYSTEM**

VERSCHLÜSSELUNGSVERFAHREN, PROGRAMM UND SYSTEM

PROCÉDÉ, PROGRAMME ET SYSTÈME DE CHIFFREMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.04.2014 JP 2014092261**

(43) Date of publication of application:
**15.02.2017 Bulletin 2017/07**

(73) Proprietor: **Kazawa, Ichiro**
**Meguro-ku, Tokyo 153-0065 (JP)**

(72) Inventor: **Kazawa, Ichiro**
**Meguro-ku, Tokyo 153-0065 (JP)**

(74) Representative: **Loo, Chi Ching et al**
**Albright IP Limited**
**County House**
**Bayshill Road**
**Cheltenham, Gloucestershire GL50 3BA (GB)**

(56) References cited:
**WO-A1-2008/114829       WO-A1-2008/114829**
**JP-A- H11 331 619        US-A- 3 624 610**
**US-A- 5 438 622          US-A1- 2010 211 787**

• **Ivan Damgård ET AL: "Expanding
Pseudorandom Functions; or: From
Known-Plaintext Security to Chosen-Plaintext
Security" In: "Network and Parallel Computing",
1 January 2002 (2002-01-01), Springer
International Publishing, Cham 032548,
XP055421712, ISSN: 0302-9743 ISBN:
978-3-642-35175-4 vol. 2442, pages 449-464, DOI:
10.1007/3-540-45708-9_29, \* page 456 - page 457 \***
• **ANAND DESAI: 'New Paradigms for Constructing
Symmetric Encryption Schemes Secure against
Chosen-Ciphertext Attack' ADVANCES IN
CRYPTOLOGY - CRYPTO vol. 2000, 2000, ISSN
0302-9743 pages 394 - 412, XP001003411**

**Description**

TECHNICAL FIELD

The present invention relates to a computer-executed method for encryption, especially those that are safe against known-plaintext attacks.

BACKGROUND ART

Encryption technology is very important in today's information technologies. It is required for encryption technology to be safe against various types of attacks; it should not be possible to decipher an encrypted text in reasonable time without knowing its encryption key.

One type of attacks is known-plaintext attack (KPA). It is an effective attack where the ciphertexts corresponding to known plain texts can be obtained. When the beginning of the plaintext is fixed data, a sequence number or a time stamp (e.g. in order to comply with communication protocol standards), it is easier to infer the plaintext corresponding to the ciphertext. Therefore, safety against KPA is an important requirement for encryption methods.

Just increasing the encryption key size can be problematic in terms of technology standard compliance and computational complexity. It is preferable to be safe against KPA, while complying with standard encryption specifications.

Coding rate also needs to be good, meaning that a ciphertext should not be significantly larger than the corresponding plain text.

Moreover, in today's information technology environment, an encryption method should be usable not only to block encryption, but also to stream encryption in order to encrypt variable-length data such as digitalized phone voices.

It is possible to pre-process a plain text using secret information which is not dependent on the plain text, the initialization vector and the encryption key in order to increase computational complexity for a KPA using multiple plaintext/ciphertext pairs.

For example, in US20030191950, a method to preprocess a plaintext using secret information based on all the bits in the plaintext is disclosed.

However, this method has an issue when applied to stream encryption, because the whole plaintext must be cached to be scanned twice, increasing the required memory space significantly.

One option for a type of rearrangement encryption is disclosed in WO2008/114829A1. Ivan Damgaard ET AL: "Expanding Pseudorandom Functions; or: From Known-Plaintext Security to Chosen-Plaintext Security" In: "Network and Parallel Computing", 1 January 2002, Springer International Publishing, discloses an abstract variable-length output pseudorandom function. Other pseudorandom number generators are disclosed in US5438622A, US2010/211787A1, and US3624610A.

SUMMARY OF INVENTION

PROBLEMS TO BE SOLVED BY THE INVENTION

To provide encryption method, system and program which have a good coding rate, are suitable for streaming encryption and are safe against known plaintext attacks.

MEANS FOR SOLVING THE PROBLEMS

The present invention solves the above problem by providing a method for encrypting a plaintext comprising: generating a random number, obtaining, using the random number, a random number sequence from one-dimensional random number array whose elements are random number sequences with mutually different length, transforming, using the obtained random number sequence, a first plaintext using a first encryption method, concatenating the random number the transformed first plaintext into a second plaintext, and transforming the second plaintext using a second encryption method.

And the present invention solves the above problem by providing a method for encrypting a plaintext according to the previous paragraph wherein: the first encryption method comprises: repeating the obtained random number sequence, and applying exclusive-OR operation on the repeated obtained random number sequence and the first plaintext.

And the present invention solves the above problem by providing a computer program for encrypting a plaintext comprising computer-executable instructions for: generating a random number, obtaining, using the random number as an index, a random number sequence from a one-dimensional random number array whose elements are random number sequences with mutually different length, transforming, using the selected random number sequence, a first plaintext using first encryption instructions, concatenating the random number the transformed first plaintext into a second plaintext, and transforming the second plaintext using second encryption instructions.

And the present invention solves the above problem by providing a computer program for encrypting a plaintext according to the previous paragraph wherein: the first encryption instructions comprise computer-executable instructions for: repeating the obtained random number sequence, and applying exclusive-OR operation on the repeated obtained random number sequence and the first plaintext.

And the present invention solves the above problem by providing a computer system for encrypting a plaintext comprising instructions for: a generator of a random number, an obtainer, obtaining using the random number as an index, a random number sequence from a one-dimensional random number array whose elements are random number sequences with mutually different length, a first transformer, using the obtained random number sequence, transforming a first plaintext using a first encryption method, a concatenater concatenating the random number the transformed first plaintext into a second plaintext, and a second transformer, transforming the second plaintext using a second encryption method.

A computer system for encrypting a plaintext according to the previous paragraph wherein: the first transformer further comprises: a third transformer, repeating the obtained random number sequence, and a fourth transformer, applying exclusive-OR operation on the repeated obtained random number sequence and the first plaintext.

ADANTAGEOUS EFFECT OF THE INVENTION

An encryption method, system and program which have a good coding rate, combined with conventional encryption methods, are suitable for streaming encryption and are safe against known plaintext attacks are provided.

BRIEF DESCRIPTION OF DRAWINGS

[Figure 1] This is an overview picture of an exemplary information system used in one embodiment of the present invention.
[Figure 2] This is an exemplary a random number sequence array used in one embodiment of the present invention.
[Figure 3] This is an exemplary overview flow chart of encryption and decryption processes in one embodiment of the present invention.
[Figure 4] This is an exemplary overview flow chart of encryption pre-process in one embodiment of the present invention.
[Figure 5] This is an exemplary overview flow chart of decryption post-process one embodiment of in the present invention.

DESCRIPTION OF EMBODIMENTS

Hereafter, one embodiment of the present invention will be explained, referring to the figures.

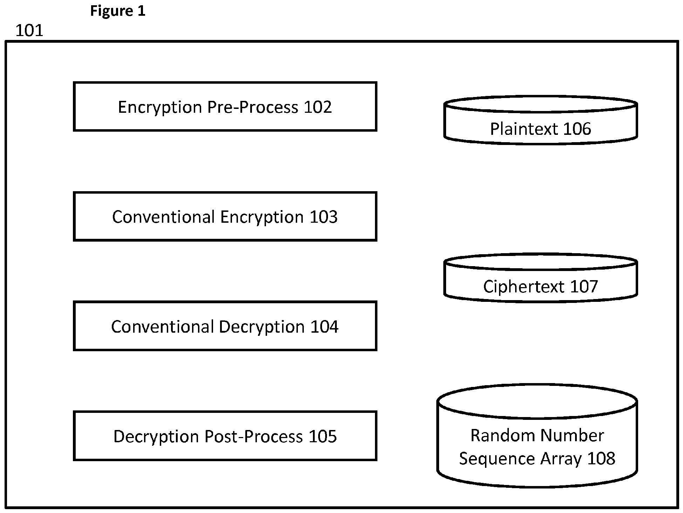

Figure 1 is a functional overview of an exemplary Information System 101 used in one embodiment of the present invention. Information System 101 can consist of physical computing machines or virtual computing resources provided by, for example, a cloud infrastructure service.

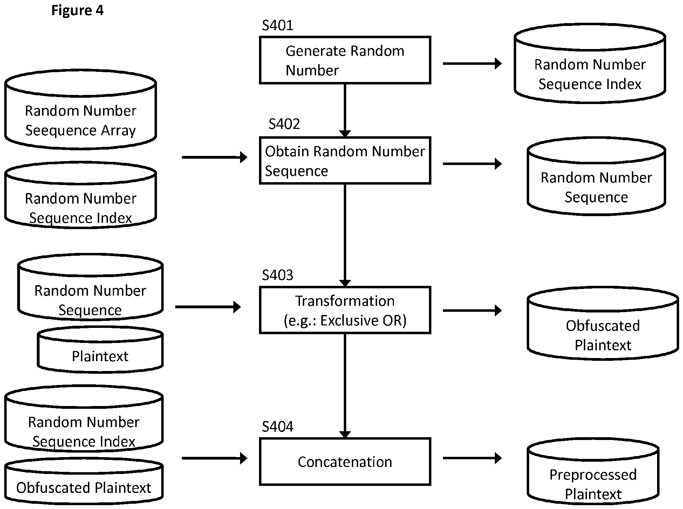

Encryption Pre-Process 102 is a function to transform plaintexts before Conventional Encryption 103. Its detail is shown in Figure 4 and described later.

Conventional Encryption 103 is a function to perform encryption (transforming plaintexts to ciphertexts) using a well-known encryption method such as Data Encryption Standard (DES). It is well-known and self-explanatory, so it will not be discussed any further.

Conventional Decryption 104 is a function to perform decryption (transforming ciphertexts to plaintexts) using a well-known method such as Data Encryption Standard (DES). It is well-known and self-explanatory, so it will not be discussed any further.

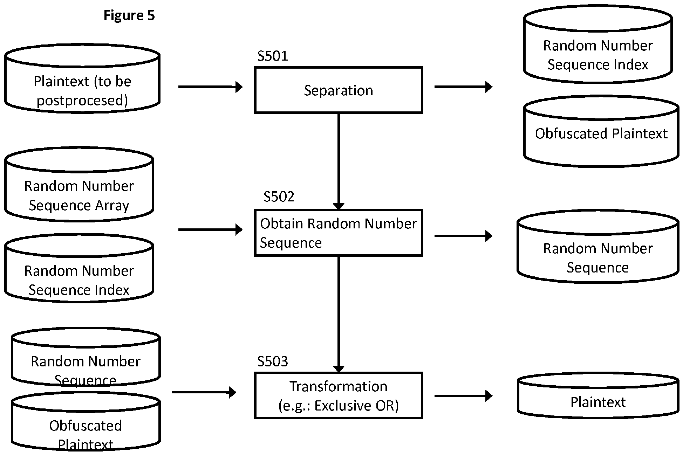

Decryption Post-Process 105 is a function to transform plaintext after Conventional Decryption 105. Its detail is shown in Figure 5 and described later.

Plaintext 106 is input data to a decryption process and output data from an encryption process in the present invention. It may be stored in a non-volatile storage such as hard disk drives or a temporary storage in main memories. It may be provided from outside of Information System 101 in the present invention.

Ciphertext 107 is output data from a decryption process and input data to an encryption process in the present invention. It may be stored in a non-volatile storage such as hard disk drives or a temporary storage in main memories. It may be provided to outside systems from Information System 101 in the present invention.

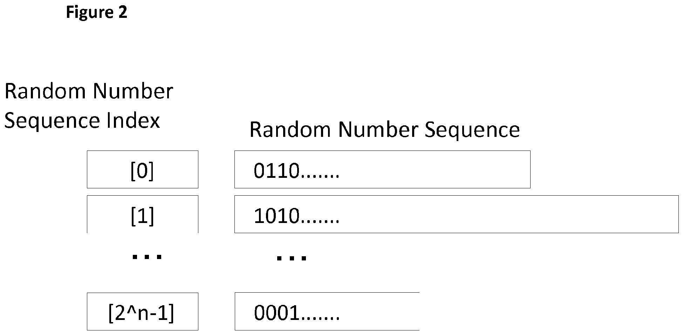

Random Number Sequence Array 108 is a mean that stores random number sequences that are used as a parameter used by Encryption Pre-Process 102 and Decryption Post-Process 105. It may be stored in a non-volatile storage or a temporary storage in main memories. It may be provided from outside of Information System 101 in the present invention. Random Number Sequence Array 108 is detailed in Figure 2 and is described later.

Figure 2 is an example of Random Number Sequence Array 108 in one embodiment in the present invention. It is a set of 2^n (2 powered by n, where n is a natural number) random numbers determined as a pre-determined specification. This specification may be an open standard accessible by anyone, or one that communicating parties can exchange before performing communication. One can specify one random number in Random Number Sequence Array 108 by specifying an index number.

Preferably, the lengths of each random number in Random Number Sequence Array 108 are different and are mutually prime, because if the length is fixed, randomness effect could be compromised.

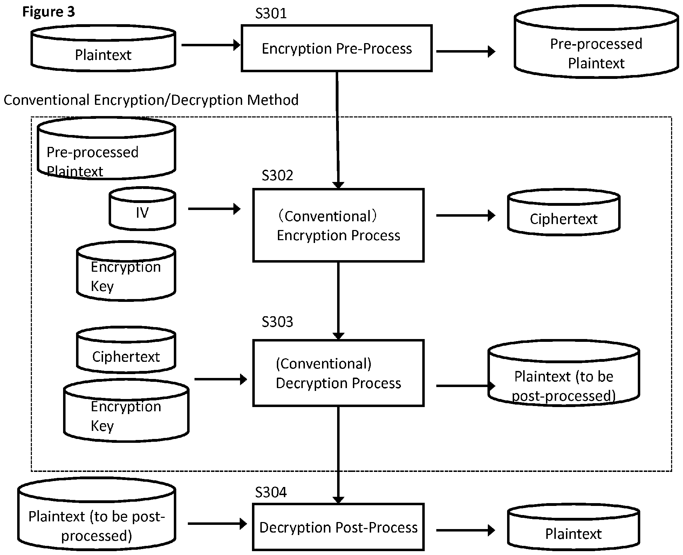

Figure 3 is an exemplary overview flow chart of encryption and decryption processes in the present invention. Each process step is depicted as a rectangular in the middle and input to each step is shown in its left, and output from each step is shown in its right. The encryption process in the present invention combines Encryption Preprocess (S301) and Conventional Encryption (S302) (for example, DES). The decryption process in the present invention combines Decryption Postprocess (S301) and Conventional Decryption (S302) (for example, DES).

Figure 4 is an exemplary overview flow chart of encryption pre-process in the present invention. Each step will be explained below.

(S401)

One n-bit random number is determined, independent of information such as the plaintext itself, the initialization vector, the encryption key or the time of day. Therefore, this random number is determined purely randomly, making a probability of an accidental match to be 2^-n (an inverse of 2 powered by n). This random number can be generated by a physical random number generator. This random number is temporarily saved as a random number sequence index.

(S402)

Using the random number sequence index in S401, a random number sequence is obtained from Random Number Sequence Array 108 and saved temporarily.

(S403)

Using the S402 random number sequence, the plaintext is transformed into an obfuscated plaintext. Preferably, this transformation should be easy to inverse-transform and should not increase the data size. For example, by repeating Random Number Sequence to match the length of the plaintext and applying XOR (exclusive OR) operation, these two conditions can be met.

(S404)

By concatenating the obfuscated plaintext in S403 and the random number index, a preprocessed plaintext can be obtained, which is an input data to Conventional Encryption Step (S302). Here "concatenating" includes concatenating the random number index in front of the obfuscated plaintext, concatenating the random number index at the end of the obfuscated plaintext, or embedding the random number index into a pre-determined position of the obfuscated plaintext. Though the preprocessed plaintext is slightly larger than the original plaintext, the size difference is limited to a bit width of the random number sequence index, not affecting coding ratio significantly.

Figure 5 is an exemplary overview flow chart of decryption post-process 304 in the present invention. Each process step will be explained below.

(S501)

The output from a conventional decryption method such as DES is separated into the random number sequence index and the obfuscated plaintext. Since the length and the position of the random number sequence index is known as the agreed-on specification, this process is straightforward.

(S502)

Using the random number sequence index in S501, the random sequence number is obtained from Random Number Sequence Array 108 and saved temporarily.

(S503)

Using the random number sequence in S502, the obfuscated plaintext is transformed into the plaintext. This transformation is inverse to the process in S403. For example, if XOR operations were performed with the random number sequence repeated as necessary, the inverse process in S503 will be the same operation.

(Proof of safety of an encryption method in the present invention)

In the following paragraphs, safety of an encryption method in the present invention will be explained.
The random number sequence index is generated from an independent source in the system. Its secrecy is ensured by encryption. One cannot assume or enforce which random number sequence index to be used. In the following explanation, n is a bit width of random number sequence index, m is the number of plaintext/ciphertext pairs required in KPA, and L is a bit width of the key used in encryption.
Even if a KPA attacker has more than one plaintext/ciphertext pairs, each pair is associated with an independent random number sequence index. Therefore, it requires $(2^n)^m = 2^{(n*m)}$ trials in KPA. On the other hand, a brute force attack requires $2^L$ trials.
In the brute force attack, each trial requires only one decrypting and matching process. On the other hand, in KPA, each trial requires additional process of finding the key using a plaintext/ciphertext pair. Therefore, letting T1 be a time for one trial in the brute force attack, and letting T2 be a time for one trial in KPA, T2 is greater than or equal to T1 (T2 >=T1).
If KPA can find a key faster than the brute force attack, that KPA can be said to be successful. Because total computation equals to the number of trials times the number of trial, the condition $T1 * 2^L > T2 * 2^{(n*m)}$ has to be met, for KPA to be successful
Since T1 < = T2, $T1 * 2^L > T2 * 2^{(n*m)}$ can be deformed as the following.

$$T1 * 2^L \ > \ T2 * 2^{(n*m)}$$

$$T1/T2 * 2^L \ > \ 2^{(n*m)}$$

$$1 * 2^L \ >= \ T1/T2 * 2^L \ > \ 2^{(n*m)}$$

$$2^L \ > \ 2^{(n*m)}$$

$$2^L \ > \ 2^{(n*m)}$$

$$(\text{Since } L>0, n>0, m>0) \ Log(2^L) \ > \ Log(2^{(n*m)})$$

$$L * Log(2) \ > \ n * m * Log(2)$$

$$L \ > \ n * m$$

$$L/n \ > \ m$$

For example, in the encryption methods in the present invention with an 8-bit random number sequence index, for KPA to be successful, it must find the key with fewer than 32 plaintext/ciphertext pairs, when the key length is 256 bit, and it must find the key with fewer than 7 plaintext/ciphertext pairs, when the key length is 56 bit.

In today's KPA attacks, the number of plaintext/ciphertext pairs is to be believed to be independent from computational complexity. However, the present invention is useful in that it can limit the number of needed plaintext/ciphertext pairs.

(Technically Advantageous Effects of the Present Invention)

Encryption methods of the present invention are easy to implement combined with conventional encryption methods, while have a good coding ratio and do not need to scan plaintexts multiple times (easier to apply to streaming encryption). Moreover, even when the encryption key length cannot be increased, limited by standard compliance, by adding a method of the present invention, overall safety, especially safety against KPA can be improved.

**Claims**

1. A method for encrypting a plaintext (106) comprising:

   generating a random number;
   obtaining, using the the random number as an index, a random number sequence from a one-dimensional random number array (108) whose elements are random number sequences with mutually different length;
   transforming, using the obtained random number sequence, a first plaintext using a first encryption method;
   concatenating the random number and the transformed first plaintext into a second plaintext; and
   transforming the second plaintext using a second encryption method.

2. The method according to Claim 1 wherein:
   the first encryption method comprises:

   repeating the obtained random number sequence; and
   applying exclusive-OR operation on the repeated obtained random number sequence and the first plaintext.

3. The method according to Claim 1 wherein:
   a length of each random number sequence in the random number array (108) is mutually prime.

4. The method according to Claim 1 wherein:
   the second encryption method is Data Encryption Standard.

5. A computer program for encrypting a plaintext (106) comprising computer-executable instructions for:

   generating a random number;
   obtaining, using the random number as an index, a random number sequence from a one-dimensional random number array (108) whose elements are random number sequences with mutually different length;
   transforming, using the selected random number sequence, a first plaintext using first encryption instructions,
   concatenating the random number and the transformed first plaintext into a second plaintext, and
   transforming the second plaintext using second encryption instructions.

6. The computer program according to Claim 5 wherein:
   the first encryption instructions comprise computer-executable instructions for:

   repeating the obtained random number sequence, and
   applying exclusive-OR operation on the repeated obtained random number sequence and the first plaintext.

7. The computer program according to Claim 5 wherein:
   a length of each random number sequence in the random number array (108) is mutually prime.

8. The computer program according to Claim 5 wherein:
   the second encryption method is Data Encryption Standard.

9. A computer system for encrypting a plaintext (106) comprising:

a generator of a random number,

an obtainer, obtaining, using the random number as an index, a random number sequence from a one-dimensional random number array (108) whose elements are random number sequences with mutually different length,

a first transformer, using the obtained random number sequence, transforming a first plaintext using a first encryption method,

a concatenater concatenating the random number and the transformed first plaintext into a second plaintext, and

a second transformer, transforming the second plaintext using a second encryption method.

10. The computer system according to Claim 9 wherein:
the first transformer further comprises:

a third transformer, repeating the obtained random number sequence, and
a fourth transformer, applying exclusive-OR operation on the repeated obtained random number sequence and the first plaintext.

11. The computer system according to Claim 9 wherein:
a length of each random number sequence in the random number array (108) is mutually prime.

12. The computer system according to Claim 9 wherein:
the second encryption method is Data Encryption Standard.


**Patentansprüche**

1. Verfahren zum Verschlüsseln eines Klartextes (106), Folgendes umfassend:

Erzeugen einer Zufallszahl;
Erhalten, unter Verwendung der Zufallszahl als einem Index, einer Zufallszahlenfolge aus einer eindimensionalen Zufallszahlenanordnung (108), deren Elemente Zufallszahlenfolgen mit voneinander verschiedener Länge sind;
Transformieren eines ersten Klartextes unter Verwendung der erhaltenen Zufallszahlenfolge, unter Verwendung eines ersten Verschlüsselungsverfahrens;
Verketten der Zufallszahl und des transformierten ersten Klartextes in einen zweiten Klartext; und
Transformieren des zweiten Klartextes unter Verwendung eines zweiten Verschlüsselungsverfahrens.

2. Verfahren nach Anspruch 1, wobei:
das erste Verschlüsselungsverfahren Folgendes umfasst:

Wiederholen der erhaltenen Zufallszahlenfolge; und
Anwenden einer Antivalenz auf die wiederholte erhaltene Zufallszahlenfolge und den ersten Klartext.

3. Verfahren nach Anspruch 1, wobei:
eine Länge jeder Zufallszahlenfolge in der Zufallszahlenanordnung (108) teilerfremd ist.

4. Verfahren nach Anspruch 1, wobei:
das zweite Verschlüsselungsverfahren Datenenkryptionsstandard ist.

5. Computerprogramm zum Verschlüsseln eines Klartextes (106), umfassend computerausführbare Anweisungen zu Folgendem:

Erzeugen einer Zufallszahl;
Erhalten, unter Verwendung der Zufallszahl als einem Index, einer Zufallszahlenfolge aus einer eindimensionalen Zufallszahlenanordnung (108), deren Elemente Zufallszahlenfolgen mit voneinander verschiedener Länge sind;
Transformieren eines ersten Klartextes unter Verwendung der ausgewählten Zufallszahlenfolge unter Verwendung erster Verschlüsselungsanweisungen, Verketten der Zufallszahl und des transformierten ersten Klartextes in einen zweiten Klartext, und Transformieren des zweiten Klartextes unter Verwendung zweiter Verschlüsselungsanweisungen.

**6.** Computerprogramm nach Anspruch 5, wobei:
die ersten Verschlüsselungsanweisungen computerausführbare Anweisungen zu Folgendem umfassen:
Wiederholen der erhaltenen Zufallszahlenfolge und Anwenden der Antivalenz auf die wiederholte erhaltene Zufallszahlenfolge und den ersten Klartext.

**7.** Computerprogramm nach Anspruch 5, wobei:
eine Länge jeder Zufallszahlenfolge in der Zufallszahlenanordnung (108) teilerfremd ist.

**8.** Computerprogramm nach Anspruch 5, wobei:
das zweite Verschlüsselungsverfahren Datenenkryptionsstandard ist.

**9.** Computersystem zum Verschlüsseln eines Klartextes (106), Folgendes umfassend:
einen Erzeuger einer Zufallszahl, einen Erhalter, der unter Verwendung der Zufallszahl als einem Index eine Zufallszahlenfolge aus einer eindimensionalen Zufallszahlenanordnung (108) erhält, deren Elemente Zufallszahlenfolgen mit voneinander verschiedener Länge sind, einen ersten Transformator, der unter Verwendung der erhaltenen Zufallszahlenfolge einen ersten Klartext unter Verwendung eines ersten Verschlüsselungsverfahrens transformiert, einen Verketter, der die Zufallszahl und den transformierten ersten Klartext in einen zweiten Klartext verkettet, und einen zweiten Transformator, der den zweiten Klartext unter Verwendung eines zweiten Verschlüsselungsverfahrens transformiert.

**10.** Computersystem nach Anspruch 9, wobei:
der erste Transformator ferner Folgendes umfasst:
einen dritten Transformator, der die erhaltene Zufallszahlenfolge wiederholt, und einen vierten Transformator, der eine Antivalenz auf die wiederholte erhaltene Zufallszahlenfolge und den ersten Klartext anwendet.

**11.** Computersystem nach Anspruch 9, wobei:
eine Länge jeder Zufallszahlenfolge in der Zufallszahlenanordnung (108) teilerfremd ist.

**12.** Computersystem nach Anspruch 9, wobei:
das zweite Verschlüsselungsverfahren Datenenkryptionsstandard ist.


## Revendications

**1.** Procédé pour chiffrer un texte en clair (106), consistant à :

générer un nombre aléatoire ;
obtenir, en utilisant le nombre aléatoire en tant qu'index, une séquence de nombres aléatoires à partir d'un tableau de nombres aléatoires unidimensionnel (108) dont les éléments sont des séquences de nombres aléatoires de longueurs mutuellement différentes ;
transformer, en utilisant la séquence de nombres aléatoires obtenue, un premier texte en clair en utilisant un premier procédé de chiffrement ;
concaténer le nombre aléatoire et le premier texte en clair transformé en un second texte en clair ; et
transformer le second texte en clair en utilisant un second procédé de chiffrement.

**2.** Procédé selon la revendication 1, dans lequel :
le premier procédé de chiffrement consiste à :

répéter la séquence de nombres aléatoires obtenue ; et
appliquer un dilemme à la séquence de nombres aléatoires obtenue répétée et au premier texte en clair.

**3.** Procédé selon la revendication 1, dans lequel :
une longueur de chaque séquence de nombres aléatoires dans le tableau de nombres aléatoires (108) est mutuellement irréductible.

**4.** Procédé selon la revendication 1, dans lequel :
le second procédé de chiffrement est le Data Encryption Standard.

**5.** Programme informatique pour chiffrer un texte en clair (106) comprenant des instructions exécutables par ordinateur pour :

générer un nombre aléatoire ;
obtenir, en utilisant le nombre aléatoire en tant qu'index, une séquence de nombres aléatoires à partir d'un tableau de nombres aléatoires unidimensionnel (108) dont les éléments sont des séquences de nombres aléatoires ayant des longueurs mutuellement différentes ;
transformer, en utilisant la séquence de nombres aléatoires sélectionnée, un premier texte en clair en utilisant de premières instructions de chiffrement,
concaténer le nombre aléatoire et le premier texte en clair transformé en un second texte en clair, et
transformer le second texte en clair en utilisant de secondes instructions de chiffrement.

**6.** Programme informatique selon la revendication 5, dans lequel :
les premières instructions de chiffrement comprennent des instructions exécutables par ordinateur pour :

répéter la séquence de nombres aléatoires obtenue et
appliquer un dilemme à la séquence de nombres aléatoires répétée obtenue et au premier texte en clair.

**7.** Programme informatique selon la revendication 5, dans lequel :
une longueur de chaque séquence de nombres aléatoires dans le tableau de nombres aléatoires (108) est mutuellement irréductible.

**8.** Programme informatique selon la revendication 5, dans lequel :
le second procédé de chiffrement est le Data Encryption Standard.

**9.** Système informatique pour chiffrer un texte en clair (106), comprenant :

un générateur de nombre aléatoire,
un dispositif d'obtention, obtenant, en utilisant le nombre aléatoire comme index, une séquence de nombres aléatoires à partir d'un tableau de nombres aléatoires unidimensionnel (108) dont les éléments sont des séquences de nombres aléatoires de longueurs mutuellement différentes,
un premier transformateur, en utilisant la séquence de nombres aléatoires obtenue,
transformant un premier texte en clair en utilisant un premier procédé de chiffrement,
un dispositif de concaténation concaténant le nombre aléatoire et le premier texte en clair transformé en un second texte en clair, et
un deuxième transformateur, transformant le second texte en clair en utilisant un second procédé de chiffrement.

**10.** Système informatique selon la revendication 9, dans lequel :
le premier transformateur comprend en outre :

un troisième transformateur, répétant la séquence de nombres aléatoires obtenue, et
un quatrième transformateur, appliquant un dilemme sur la séquence de nombres aléatoires répétée obtenue et le premier texte en clair.

**11.** Système informatique selon la revendication 9, dans lequel :
une longueur de chaque séquence de nombres aléatoires dans le tableau de nombres aléatoires (108) est mutuellement irréductible.

**12.** Système informatique selon la revendication 9, dans lequel :
le second procédé de chiffrement est le Data Encryption Standard.

**Figure 1**

101

**Figure 2**

Random Number
Sequence Index

Random Number Sequence

| [0] | 0110....... |
| [1] | 1010....... |
| ... | ... |
| [2^n-1] | 0001....... |

**Figure 3**

S301

Plaintext → Encryption Pre-Process → Pre-processed Plaintext

Conventional Encryption/Decryption Method

Pre-processed Plaintext

IV

Encryption Key

S302 → (Conventional) Encryption Process → Ciphertext

Ciphertext

Encryption Key

S303 → (Conventional) Decryption Process → Plaintext (to be post-processed)

Plaintext (to be post-processed) → S304 Decryption Post-Process → Plaintext

**Figure 4**

S401

```
Generate Random
Number
```

Random Number
Sequence Index

Random Number
Seequence Array

Random Number
Sequence Index

S402

```
Obtain Random Number
Sequence
```

Random Number
Sequence

Random Number
Sequence

Plaintext

S403

```
Transformation
(e.g.: Exclusive OR)
```

Obfuscated
Plaintext

Random Number
Sequence Index

Obfuscated Plaintext

S404

```
Concatenation
```

Preprocessed
Plaintext

**Figure 5**

S501 Separation

S502 Obtain Random Number Sequence

S503 Transformation (e.g.: Exclusive OR)

Plaintext (to be postprocesed)

Random Number Sequence Array

Random Number Sequence Index

Random Number Sequence

Obfuscated Plaintext

Random Number Sequence Index

Obfuscated Plaintext

Random Number Sequence

Plaintext

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20030191950 A
- WO 2008114829 A1
- US 5438622 A
- US 2010211787 A1
- US 3624610 A

### Non-patent literature cited in the description

- Expanding Pseudorandom Functions; or: From Known-Plaintext Security to Chosen-Plaintext Security. **IVAN DAMGAARD et al.** Network and Parallel Computing. Springer International Publishing, 01 January 2002